# EUROPÄISCHE PATENTSCHRIFT

(11) **EP 3 819 837 B1**
(45) Veröffentlichungstag und Bekanntmachung des Hinweises auf die Patenterteilung: **28.01.2026**
(21) Anmeldenummer: 20194788.4
(22) Anmeldetag: 07.09.2020
(51) Int. Cl.: G06Q 10/06, G06Q 50/02

(54) **ASSISTENZSYSTEM ZUR ERMITTLUNG EINER RESSOURCENPROGNOSE EINES LANDWIRTSCHAFTLICHEN FELDES**
ASSISTANCE SYSTEM FOR DETERMINING A RESOURCE PROGNOSIS OF AN AGRICULTURAL FIELD
SYSTÈME D'AIDE À LA DÉTERMINATION D'UNE PRÉVISION DE RESSOURCES POUR UN CHAMP AGRICOLE

(30) Priorität: 09.11.2019 DE 102019130270
(43) Veröffentlichungstag der Anmeldung: 12.05.2021
(73) Patentinhaber: CLAAS 365FarmNet GmbH, 10117 Berlin (DE)
(72) Erfinder: von Löbbecke, Maximilian, 14129 Berlin (DE)
(74) Vertreter: CLAAS Gruppe

(56) Entgegenhaltungen:
- US-A1- 2012 101 861

## Beschreibung

Die Erfindung betrifft ein Assistenzsystem zur Ermittlung einer Ressourcenprognose eines landwirtschaftlichen Feldes gemäß dem Oberbegriff von Anspruch 1 sowie ein Verfahren zur Ermittlung einer Ressourcenprognose eines landwirtschaftlichen Feldes gemäß dem Oberbegriff von Anspruch 12.

In den Betrachtungen der modernen Landwirtschaft sind landwirtschaftliche Felder längst als komplexe biochemische Systeme zu sehen. Das Erzielen einer optimalen Bewirtschaftung erfordert genaue Messungen und Prognosen über Feldzustandsdaten wie die Nährstoffaufnahme einer Pflanze und Feldumgebungsdaten wie das Wetter. Ähnlich wie bei der Regelung einer Maschine ergeben sich für einen Benutzer, im Allgemeinen einen Landwirt, vielfältige Möglichkeiten, in das System einzugreifen. Diese Möglichkeiten unterliegen komplexen Wechselwirkungen, die von historischen Daten abhängig sind und zukünftige Daten beeinflussen. Gleichzeitig unterliegen diese Möglichkeiten technischen, chemischen und betriebswirtschaftlichen Randbedingungen.

Das bekannte Assistenzsystem (US 9,058,633 A), von dem die Erfindung ausgeht, stellt Felddaten eines landwirtschaftlichen Feldes mittels Satellitendaten bereit. Anhand eines Pflanzenwachstumsmodells wird abhängig von den Felddaten die Verwendung von landwirtschaftlichen Ressourcen wie beispielsweise Pflanzenschutzmitteln überwacht.

Berücksichtigt wird jedoch nicht, dass beispielsweise verschiedene Auswahlmöglichkeiten für ein konkretes Pflanzenschutzmittel bestehen, welche sich in der Wirkung und Wirtschaftlichkeit voneinander unterscheiden. Hierbei besteht allgemein das Bedürfnis für eine Optimierung der Bereitstellung der Ressourcen, welche an die Randbedingungen angepasst werden soll. Ferner offenbart US 2012/101861 ein Verfahren zur Überwachung und Vorhersage landwirtschaftlicher Produktionen.

Der Erfindung liegt das Problem zugrunde, das bekannte Assistenzsystem derart auszugestalten und weiterzubilden, dass die Bereitstellung von Ressourcen zur Durchführung von landwirtschaftlichen Aktionen vereinfacht wird.

Das obige Problem wird bei einem Assistenzsystem gemäß dem Oberbegriff von Anspruch 1 durch die Merkmale des kennzeichnenden Teils von Anspruch 1 gelöst.

Wesentlich ist die grundsätzliche Überlegung, Ressourcendaten bereitzustellen, welche die Verfügbarkeit von Ressourceneinheiten benennen. Einerseits kann hiermit sichergestellt werden, dass die erforderlichen Ressourcen bereitgestellt werden können, da nur auf verfügbare Ressourceneinheiten zurückgegriffen wird. Andererseits ist wesentlich, dass anhand der Ressourcendaten eine Optimierung der Auswahl der Ressourceneinheiten erreicht werden kann, sodass die Auswahl praxisnah anhand der jeweiligen Bedürfnisse des Benutzers und den Eigenschaften des Feldes getroffen wird.

Es wird daher ein Assistenzsystem zur Ermittlung einer Recourcenprognose eines landwirtschaftlichen Feldes vorgeschlagen, wobei das Assistenzsystem eine Datenbank und eine Prognoseeinheit aufweist, wobei die Datenbank historische Felddaten, aktuelle Felddaten und erwartete Felddaten des landwirtschaftlichen Feldes umfasst, wobei die Felddaten Feldzustandsdaten und Feldumgebungsdaten umfassen.

Die Prognoseeinheit ermittelt auf Grundlage einer Planungsvorgabe und abhängig von den Felddaten anhand eines vorgegebenen Prognosemodells eine Ressourcenprognose, welche den voraussichtlichen Bedarf von landwirtschaftlichen Ressourcen, zumindest Hilfsmittel und Betriebsmittel, zur Durchführung von landwirtschaftlichen Aktionen am Feld entsprechend der Planungsvorgabe abbildet.

Im Einzelnen wird vorgeschlagen, dass die Datenbank Ressourcendaten umfasst, welche die Verfügbarkeit von Ressourceneinheiten zur Bereitstellung der Ressourcen benennen, und dass die Prognoseeinheit anhand eines vorgegebenen Optimierungskriteriums in einer Ressourcenliste der ermittelten Ressourcenprognose Ressourceneinheiten zuordnet, welche in den Ressourcendaten als verfügbar benannt sind.

Das Ziel der vorschlagsgemäßen Lehre ist es somit, dem Benutzer eine Ressourcenliste zur Verfügung zu stellen, welche eine Empfehlung über die konkreten Ressourceneinheiten enthält, die weiter die jeweiligen Bedürfnisse des Benutzers und die Eigenschaften des Feldes berücksichtigt.

Die Ressourcenprognose wird auf Grundlage der Planungsvorgabe ermittelt, wobei die Planungsvorgabe in der bevorzugten Ausgestaltung gemäß Anspruch 2 von dem Benutzer vorgegeben wird. Ebenso kann zumindest ein Teil der Planungsvorgabe von dem Assistenzsystem ermittelt werden.

In der besonders bevorzugten Ausgestaltung gemäß Anspruch 3 umfasst die Ressourcenprognose eine Ertragsprognose eines Feldbestands des Feldes basierend auf den Felddaten. Das Optimierungskriterium betrifft hier vorzugsweise die Ertragsprognose. Die Zuordnung der Ressourceneinheiten wird somit zweckmäßig anhand des zu erwartenden Feldertrags durchgeführt.

Gemäß der weiteren, ebenfalls bevorzugten Ausgestaltung gemäß Anspruch 4 umfassen die Ressourcendaten weiter den jeweiligen Ressourceneinheiten zugeordnete Ressourcewirkungsdaten, sodass die Möglichkeiten für die Optimierung der Auswahl der Ressourceneinheiten erweitert werden.

Besonders bevorzugt ermittelt die Prognoseeinheit anhand der Ressourcenprognose eine Gewinnprognose des Feldes (Anspruch 5). So kann neben dem zuvor genannten Ertrag auch die wirtschaftlich relevante Größe des Gewinns mit der Ressourcenprognose abgebildet werden, wobei das Optimierungskriterium vorzugsweise die Gewinnprognose betrifft.

Ein weiterer, für viele Anwendungsfälle wichtiger Aspekt ist die Umweltverträglichkeit der Ressourcen, welcher Gegenstand des Anspruchs 6 ist. Die Prognoseeinheit ermittelt hierbei anhand der Ressourcenprognose eine Umweltverträglichkeitsprognose des Feldes.

In der besonders zweckmäßigen Ausgestaltung gemäß Anspruch 7 ist eine Reservierroutine zur Sicherstellung der Verfügbarkeit der Ressourceneinheiten vorgesehen.

In der weiteren, besonders bevorzugten Ausgestaltung gemäß Anspruch 8 erzeugt die Prognoseeinheit anhand des Optimierungskriteriums eine Trefferliste mit mehreren Ressourcenlisten. Dem Benutzer werden somit verschiedene, an die jeweiligen Anforderungen angepasste Optionen für eine Auswahl der Ressourceneinheiten zur Verfügung gestellt.

Die Ansprüche 9 und 10 betreffen vorzugsweise von den Felddaten umfasste Daten, deren Einfluss auf die Ressourcenprognose besonders relevant ist. Anspruch 11 betrifft bevorzugte Ausgestaltungen der Ressourceneinheiten.

Nach einer weiteren Lehre gemäß Anspruch 12, der eigenständige Bedeutung zukommt, wird ein Verfahren zur Ermittlung einer Ressourcenprognose eines landwirtschaftlichen Feldes, insbesondere mittels eines vorschlagsgemäßen Assistenzsystems, beansprucht. Auf alle Ausführungen zu dem vorschlagsgemäßen Assistenzsystem darf verwiesen werden.

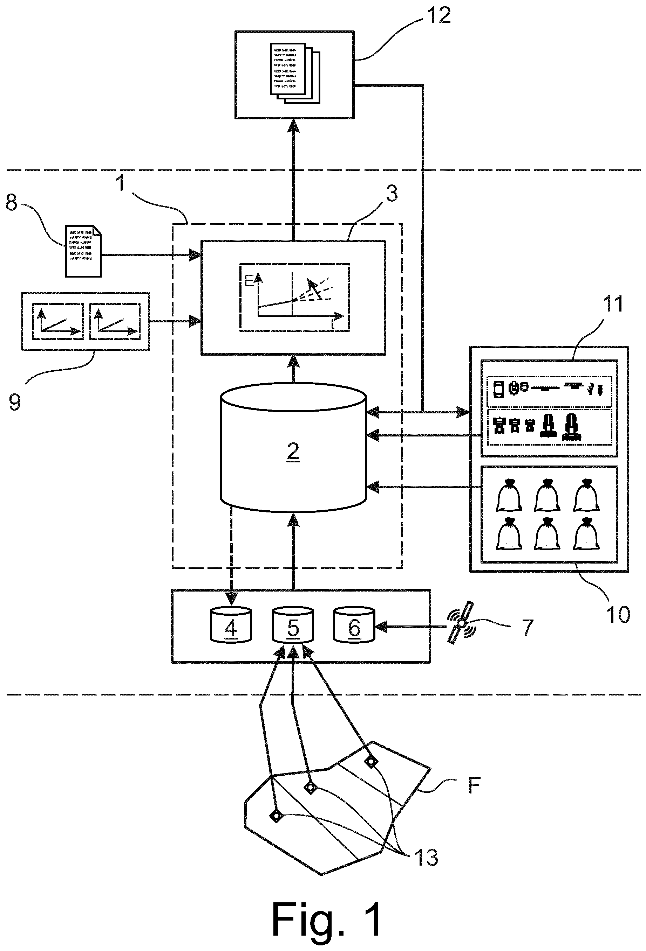

Im Folgenden wird die Erfindung anhand einer lediglich ein Ausführungsbeispiel darstellenden Zeichnung näher erläutert. In der Zeichnung zeigt
- Fig. 1: eine schematische Darstellung eines vorschlagsgemäßen Assistenzsystems.

Die Erfindung betrifft ein Assistenzsystem 1 zur Ermittlung einer Ressourcenprognose eines landwirtschaftlichen Feldes F. Bei dem Assistenzsystem kann es sich beispielsweise um ein rechnergestütztes System handeln wie einen Server oder ein System aus mehreren Servern und/oder Clients.

Das Assistenzsystem 1 weist eine Datenbank 2 auf, welche auf einem nichtflüchtigen Speicher des Assistenzsystems 1 hinterlegt ist. Das Assistenzsystem 1 weist weiter eine Prognoseeinheit 3 auf, welche zur Ermittlung einer im Folgenden noch weiter erläuterten Ressourcenprognose des landwirtschaftlichen Felds F eingerichtet ist. Die Prognoseeinheit 3 weist hier und vorzugsweise einen Speicher mit Programmanweisungen und mindestens einen Prozessor zum Ausführen der Programmanweisungen auf, wobei der Speicher und die Programmanweisungen eingerichtet sind, gemeinsam mit dem Prozessor die Ressourcenprognose zu ermitteln.

Die Datenbank 2 umfasst historische Felddaten 4, aktuelle Felddaten 5 und erwartete Felddaten 6 des landwirtschaftlichen Feldes F. Bei den historischen Felddaten 4 handelt es sich allgemein um in vergangenen landwirtschaftlichen Perioden erfasste Felddaten, welche insbesondere von dem Assistenzsystem 1 hinterlegt werden. Die vergangenen Perioden beziehen sich dabei insbesondere auf Ernteperioden, können aber auch andere an landwirtschaftlichen Zyklen orientierte Perioden betreffen. Die aktuellen Felddaten 5 betreffen entsprechend Felddaten der aktuellen landwirtschaftlichen Periode. Bei den erwarteten Felddaten 6 kann es sich um eine Prognose für den zukünftigen Verlauf der Felddaten 6 handeln, welche von dem Assistenzsystem 1 erzeugt und/oder von einem externen System 7 bereitgestellt wird.

Die Felddaten 4, 5, 6 umfassen hierbei Feldzustandsdaten, welche repräsentativ für Eigenschaften des Feldes F, insbesondere der Früchte und/oder des Bodens des Feldes F. Die Feldumgebungsdaten sind repräsentativ für Eigenschaften der unmittelbaren und mittelbaren Umgebung des Feldes F, welche Einfluss auf landwirtschaftliche Aspekte, insbesondere einen Feldbestand, des Feldes F nehmen kann.

Die Prognoseeinheit ermittelt auf Grundlage einer Planungsvorgabe 8 und abhängig von den Felddaten 4, 5, 6 anhand eines vorgegebenen Prognosemodells 9 eine Ressourcenprognose. Bei der Planungsvorgabe 8 handelt es sich um eine Vorgabe zumindest eines die Zukunft betreffenden landwirtschaftlichen Aspekts des Feldes F, insbesondere bezüglich der Sorte der anzubauenden Früchte und/oder bezüglich der landwirtschaftlichen Aktionen betreffend das Feld, beispielsweise eine Aussaat, eine Düngung, eine Verwendung von Pflanzenschutz oder eine Ernte. Die Planungsvorgabe 8 kann hierbei angeben, dass ein oder mehrere landwirtschaftliche Aspekte allgemein realisiert werden sollen, beispielsweise dass eine bestimmte Frucht anzubauen ist. Die Planungsvorgabe 8 kann ebenso zeitliche Vorgaben für landwirtschaftliche Aspekte enthalten, beispielsweise dass eine Aussaat und/oder eine Düngung in bestimmten Zeiträumen vorgenommen werden soll bzw. sollen. Die Planungsvorgabe 8 kann ebenso Vorgaben bezüglich der landwirtschaftlichen Ressourcen zur Durchführung der landwirtschaftlichen Aktionen enthalten, beispielsweise welches Saatgut und/oder welcher Wirkstoff verwendet wird bzw. werden. Die Planungsvorgabe 8 kann ebenso vorgeben, dass bestimmte Ressourcen von der Verwendung ausgeschlossen werden, beispielsweise um gesetzliche Anforderungen oder Erfordernisse für die ökologische Landwirtschaft einzuhalten.

Die ermittelte Ressourcenprognose bildet den voraussichtlichen Bedarf von landwirtschaftlichen Ressourcen, zumindest Hilfsmittel und Betriebsmittel, zur Durchführung von landwirtschaftlichen Aktionen am Feld entsprechend der Planungsvorgabe 8 ab. Die Ressourcenprognose gibt hierbei an, welche Verwendung von Ressourcen zur Einhaltung der Planungsvorgaben 8 ausgehend von den Felddaten zu erwarten ist. Die Ressourcenprognose enthält vorzugsweise eine Aufstellung der Art der Ressourcen, der Menge der Ressourcen sowie des Zeitraums, zu welchem die jeweilige Ressource in der jeweiligen landwirtschaftlichen Aktion zu verwenden ist.

Unter den Hilfsmitteln werden Ressourcen verstanden, welche eine direkte Auswirkung auf den Ertrag des Feldes haben. Hierunter fallen unter anderem Saatgut sowie Wirkstoffe, welche auf das Feld angewendet und insbesondere auf die Früchte und/oder den Boden aufgebracht und/oder eingebracht werden, beispielsweise Düngemittel, Wachstumsregulatoren, Erntehilfsmittel, Fungizide, Pestizide, Herbizide oder dergleichen. Unter den Betriebsmitteln werden Ressourcen verstanden, welche den Prozess zur Ertragserwirtschaftung ermöglichen. Hierzu zählen unter anderem der Einsatz von landwirtschaftlichen Arbeitsmaschinen sowie Teilen hiervon, Werkzeugen, Verschleißteilen oder dergleichen.

Die Ressourcenprognose wird anhand des vorgegebenen Prognosemodells 9 ermittelt. In einem einfachen Fall kann das Prognosemodell 9 eine Extrapolation anhand vorgegebener mathematischer Funktionen umfassen, welche insbesondere auf Grundlage der historischen Felddaten 4 und der aktuellen Felddaten 5 durchgeführt wird. Im Prognosemodell 9 wird beispielsweise der voraussichtliche Bedarf von Ressourcen weiter anhand der erwarteten Felddaten ermittelt. Vorzugsweise umfasst das Prognosemodell 9 mindestens ein Pflanzenwachstumsmodell, welches insbesondere die erwarteten Feldumgebungsdaten berücksichtigt, und/oder mindestens ein Wirkmechanismusmodell der Ressourcen, insbesondere der Hilfsmittel.

Wesentlich ist nun, dass die Datenbank 2 Ressourcendaten umfasst, welche die Verfügbarkeit von Ressourceneinheiten 10, 11 zur Bereitstellung der Ressourcen benennen, und dass die Prognoseeinheit 3 anhand eines vorgegebenen Optimierungskriteriums in einer Ressourcenliste 12 der ermittelten Ressourcenprognose Ressourceneinheiten 10, 11 zuordnet, welche in den Ressourcendaten als verfügbar benannt sind.

Unter den Ressourceneinheiten 10, 11 sind die konkreten Einheiten zu verstehen, welche die Ressourcen bereitstellen können, beispielsweise eine spezifische landwirtschaftliche Arbeitsmaschine oder eine spezifische Menge eines bestimmten Produkts enthaltend einen Wirkstoff. In Fig. 1 sind hierzu Ressourceneinheiten in Form von Hilfsmitteln 10 und in Form von Betriebsmitteln 11 dargestellt.

Die Ressourcendaten können beispielsweise nach Art eines Datenpools bereitgestellt werden, wobei verschiedene Wirtschaftseinheiten wie Händler, Vermieter und Erzeuger von Ressourceneinheiten 10, 11 die Verfügbarkeit ihrer Ressourceneinheiten 10, 11 dem Datenpool zuführen. Die Ressourcendaten benennen hierbei unter anderem, in welchem Zeitraum die jeweilige Ressourceneinheit 10, 11 verfügbar ist. Bei der Ressourceneinheit 10, 11 kann es sich beispielsweise um eine anzumietende Ressourceneinheit 10, 11 handeln, etwa im Falle einer landwirtschaftlichen Arbeitsmaschine, wobei die Ressourcendaten benennen, in welchem Zeitraum die Ressourceneinheit 10, 11 bereits reserviert oder noch verfügbar ist. Ebenso kann es sich bei der Ressourceneinheit 10, 11 um eine zu erwerbende Ressourceneinheit 10, 11 handeln, wobei die Ressourcendaten benennen, welche Menge der Ressourceneinheit 10, 11 in welchem Zeitraum lieferbar sind.

Das Optimierungskriterium weist insbesondere mehrere Teilkriterien auf, welche im Rahmen der zu erstellenden Ressourcenliste 12 optimiert werden. Hierbei kann eine Wichtung der Teilkriterien vorgenommen werden. Vorzugsweise handelt es sich bei dem Optimierungskriterium oder zumindest bei einem Teilkriterium des dem Optimierungskriteriums um eine Maximierung, einer Minimierung, ein Einhalten eines Mindestwerts oder ein Einhalten eines Maximalwerts einer Größe, beispielsweise des Ertrags des Feldes oder einer Wahrscheinlichkeit. Die Prognoseeinheit ermittelt diejenigen Ressourceneinheiten 10, 11, welche in den Ressourcendaten als verfügbar benannt sind und welche die Ressourcen bereitstellen, für welche gemäß der Ressourcenprognose ein voraussichtlicher Bedarf besteht. Die Auswahl der Ressourceneinheiten 10, 11 wird weiter anhand des Optimierungskriteriums vorgenommen. Beispielsweise werden zunächst die als verfügbar benannten Ressourceneinheiten 10, 11 ausgewählt und hieraus wiederum diejenigen Ressourceneinheiten selektiert, welche das Optimierungskriterium erfüllen.

Die Prognoseeinheit erzeugt eine Ressourcenliste 12, welche eine Zuordnung der anhand des Optimierungskriterium ermittelten Ressourceneinheiten 10, 11 zur Ressourcenprognose enthält. Bei der Ressourcenliste 12 handelt es sich somit im Ergebnis um eine Aufstellung von konkreten Ressourceneinheiten 10, 11, welche die zur Realisierung der Planungsvorgaben voraussichtlich benötigten Ressourcen unter gleichzeitiger Berücksichtigung des Optimierungskriteriums angibt. Anhand der in den Ressourcendaten benannten Verfügbarkeit wird gleichzeitig sichergestellt, dass die konkreten Ressourceneinheiten 10, 11 zu dem jeweiligen, für die Verwendung der Ressource vorgesehenen Zeitraum auch tatsächlich verfügbar sind.

Die Planungsvorgabe wird gemäß einer Ausgestaltung von dem Benutzer vorgegeben. Der Benutzer kann hierbei die Planungsvorgabe an einer nicht dargestellten Benutzerschnittstelle eingeben, welche Teil des Assistenzsystems 1 sein kann oder mit dem Assistenzsystem 1 in Kommunikation steht. Ebenso kann in einer Ausgestaltung die Planungsvorgabe zumindest teilweise von dem Assistenzsystem ermittelt werden, beispielsweise auf Grundlage der Felddaten 4, 5, 6.

Gemäß einer weiteren Ausgestaltung umfasst die Ressourcenprognose eine Ertragsprognose eines Feldbestands des Feldes basierend auf den Felddaten. Die Prognoseeinheit 3 erzeugt hierbei anhand des Prognosemodells 9, vorzugsweise anhand eines Pflanzenwachstumsmodells, die Ertragsprognose. Unter dem Ertrag wird insbesondere die Masse oder das Volumen der Ernteeinfuhr des Feldes F, bezogen auf die Fläche oder auf das gesamte Feld F, verstanden. In der Ertragsprognose wird ein erwarteter Ertrag abgebildet, insbesondere verknüpft mit einer Unsicherheit für den Ertrag und/oder einer Wahrscheinlichkeit für das Eintreten dieses Ertrags. Weiter betrifft in dieser Ausgestaltung das Optimierungskriterium vorzugsweise die Ertragsprognose, wobei beispielsweise ein Teilkriterium des Optimierungskriteriums dadurch definiert ist, dass der Ertrag aus der Ertragsprognose maximiert wird oder einen Mindestwert einhält. Die Prognoseeinheit 3 trifft dann eine Zuordnung der als verfügbar benannten Ressourceneinheiten 10, 11 beispielsweise derart, dass aus den als verfügbar benannten Ressourceneinheiten 10, 11 diejenigen Ressourceneinheiten 10, 11 ausgewählt werden, welche gemäß der Ertragsprognose den maximalen Ertrag erbringen.

Neben der bereits beschriebenen Benennung der Verfügbarkeit der Ressourceneinheiten 10, 11 können die Ressourcendaten weiter den jeweiligen Ressourceneinheiten 10, 11 zugeordnete Ressourcenwirkungsdaten umfassen. Die Ressourcewirkungsdaten geben hierbei für die Wirkung der jeweiligen Ressourceneinheit 10, 11 charakteristische Größen an. Die Ressourcenwirkungsdaten umfassen vorzugsweise Ressourcenkostendaten, welche beispielsweise den Anschaffungspreis, Lieferkosten und/oder Instandhaltungskosten der jeweiligen Ressourceneinheit 10, 11 angeben. Vorzugsweise umfassen die Ressourcenwirkungsdaten Umweltverträglichkeitsdaten, beispielsweise betreffend die anfallende Belastung des Bodens, des Grundwassers und/oder der Luft bei Verwendung der Ressourceneinheit 10, 11. Die Ressourcenwirkungsdaten können zudem auch mögliche Wechselwirkungen zwischen einzelnen Ressourceneinheit 10, 11 betreffen, beispielsweise eine Unverträglichkeit von Wirkstoffen oder dergleichen.

Gemäß einer weiteren, ebenfalls bevorzugten Ausgestaltung ermittelt die Prognoseeinheit 3 anhand der Ressourcenprognose eine Gewinnprognose des Feldes basierend auf den Ressourcenkostendaten. Das Prognosemodell 9 betrifft hierbei technische, pflanzenbiologische und monetäre Zusammenhänge, die ursächlich für die Gewinnerzielung sind. Die Gewinnprognose wird vorzugsweise auf Grundlage der oben beschriebenen Ertragsprognose ermittelt. Neben dem Ertrag kann die Gewinnprognose beispielsweise auch die Umweltverträglichkeitsdaten heranziehen, um die Nachhaltigkeit der zu verwendenden Ressourceneinheiten 10, 11 und deren Einfluss auf den Wert des Feldes F zu berücksichtigen.

Das Optimierungskriterium betrifft vorzugweise die Gewinnprognose, wobei beispielsweise ein Teilkriterium des Optimierungskriteriums dadurch definiert ist, dass der Gewinn aus der Gewinnprognose maximiert wird. Die Prognoseeinheit 3 trifft dann eine Zuordnung der als verfügbar benannten Ressourceneinheiten 10, 11 vorzugsweise derart, dass aus den als verfügbar benannten Ressourceneinheiten 10, 11 diejenigen Ressourceneinheiten 10, 11 ausgewählt werden, welche gemäß der Gewinnprognose den maximalen Gewinn erbringen.

Gemäß einer weiteren, bevorzugten Ausgestaltung ermittelt die Prognoseeinheit 3 anhand der Ressourcenprognose eine Umweltverträglichkeitsprognose des Feldes basierend auf den Umweltverträglichkeitsdaten und das Optimierungskriterium betrifft weiter vorzugsweise die Umweltverträglichkeitsprognose. Mit der Umweltverträglichkeitsprognose wird beispielsweise eine zu erwartende Größe für die Belastung des Bodens, des Grundwassers und/oder der Luft bei Verwendung der Ressourceneinheit 10, 11 ermittelt, etwa für die Menge der Rückstände, der Emissionen, der benötigten Energie oder dergleichen. Die Prognoseeinheit 3 trifft dann die Zuordnung der Ressourceneinheiten 10, 11 beispielsweise derart, dass aus den als verfügbar benannten Ressourceneinheiten 10, 11 diejenigen Ressourceneinheiten 10, 11 ausgewählt werden, welche die Größe für die Belastung minimieren oder die Belastung unterhalb eines Grenzwerts halten.

Wie bereits angeführt, kann das Optimierungskriterium mehrere Teilkriterien aufweisen, welche jeweils im Rahmen der zu erstellenden Ressourcenliste 12 optimiert werden. Vorzugsweise können hierbei die Teilkriterien betreffend die Ertragsprognose, die Gewinnprognose und/oder die Umweltverträglichkeitsprognose kombiniert werden. Beispielsweise kann das Optimierungskriterium eine Maximierung des Ertrags betreffen, wobei gleichzeitig die Umweltverträglichkeit bestimmte Vorgaben einhalten soll. Ebenso kann eine Wichtung von Teilkriterien vorgenommen werden, wodurch etwa ein Kompromiss zwischen Ertrag und Umweltverträglichkeit mit einer vorgegebenen Wichtung dieser Teilkriterien erzielt wird. Weiter kann das Optimierungskriterium die Wahrscheinlichkeit für das Eintreten eines bestimmten Ertrags und/oder Gewinns betreffen und beispielsweise diejenigen Ressourceneinheiten 10, 11 ausgewählt werden, welche mit der höchsten Wahrscheinlichkeit zu dem bestimmten Ertrag und/oder Gewinn führen.

Gemäß einer weiteren, bevorzugten Ausgestaltung benennt das Assistenzsystem in einer Reservierroutine die in der Ressourcenliste 12 zugeordneten Ressourceneinheiten in den Ressourcendaten als unverfügbar. Die Reservierroutine kann beispielsweise automatisch mit der Erzeugung der Ressourcenliste 12 ausgelöst werden, sodass sichergestellt wird, dass die Ressourceneinheiten 10, 11 aus der Ressourcenliste 12 auch tatsächlich für den Benutzer verfügbar bleiben. Ebenso kann die Reservierroutine durch den Benutzer ausgelöst werden. Das Assistenzsystem 1 veranlasst beispielsweise die Ausgabe der Ressourcenliste 12 an den Benutzer. Der Benutzer kann zu einer Bestätigung der Ressourcenliste 12 aufgefordert werden und erhält vorzugsweise auch Gelegenheit, manuelle Änderungen an der Ressourcenliste 12 vorzunehmen. Nach einer Bestätigung werden die Ressourceneinheiten 10, 11 dadurch reserviert, dass diese in den Ressourcendaten als unverfügbar benannt werden.

Gemäß einer weiteren, bevorzugten Ausgestaltung erzeugt die Prognoseeinheit 3 anhand des Optimierungskriteriums eine Trefferliste mit mehreren Ressourcenlisten 12 von als verfügbar benannten Ressourceneinheiten 10, 11. Beispielsweise können mehrere Möglichkeiten für Zuordnungen von Ressourceneinheiten 10, 11 bestehen, welche das Optimierungskriterium erfüllen, etwa wenn das Optimierungskriterium das Einhalten eines Mindestwerts betrifft. Das Assistenzsystem 1 gibt die Trefferliste an den Benutzer aus oder veranlasst deren Ausgabe, sodass eine Auswahl einer der Ressourcenlisten 12 durch den Benutzer getroffen werden kann. Vorzugsweise ist die Trefferliste anhand einer in der Ressourcenprognose abgebildeten Wahrscheinlichkeit zur Erfüllung des Optimierungskriteriums geordnet.

Gemäß einer weiteren, bevorzugten Ausgestaltung umfassen die Feldzustandsdaten Wirkstoffdaten, Fruchtdaten und/oder Bodendaten, insbesondere Nährstoffdaten, und/oder Schädlingsdaten. Unter den historischen Wirkstoffdaten wird beispielsweise verstanden, welche Wirkstoffe bereits im Zusammenhang mit dem Feld F verwendet wurden. Die Feldzustandsdaten werden vorzugsweise von mindestens einem Sensor 13 ermittelt. In Fig. 1 sind hierzu eine Mehrzahl von Sensoren 13 dargestellt, wobei die Sensoren 13 jeweils einem Abschnitt des Feldes F zugeordnet sind. Bei den Sensoren 13 kann es sich um statische Sensoren handeln. Vorzugsweise ist jedoch mindestens ein Sensor 13 einer landwirtschaftlichen Arbeitsmaschine vorgesehen, welcher Feldzustandsdaten ermittelt.

Vorzugsweise umfassen die Feldumgebungsdaten Wetterdaten und/oder Schädlingsdaten. Die Wetterdaten betreffen beispielsweise Temperatur, Luftdruck, Niederschlag, Sonneneinstrahlung, Wind oder dergleichen an einer oder mehreren Positionen des Feldes F und/oder in der Umgebung des Feldes F. Die Wetterdaten, insbesondere erwartete Wetterdaten, können beispielsweise von einem externen System 7 wie einem Wetterdienstleister bereitgestellt werden.

In einer weiteren bevorzugten Ausgestaltung umfassen die Ressourceneinheiten landwirtschaftliche Arbeitsmaschinen, Werkzeuge, Saatgute, Pflanzenschutzmittel und/oder Düngemittel.

Gemäß einer weiteren Lehre, der eigenständige Bedeutung zukommt, wird ein Verfahren zur Ermittlung einer Ressourcenprognose eines landwirtschaftlichen Feldes F als solches beansprucht. Das Verfahren wird mittels eines landwirtschaftlichen Assistenzsystems 1, vorzugsweise mittels eines vorschlagsgemä-ßen Assistenzsystems 1, durchgeführt, wobei das Assistenzsystem 1 eine Datenbank 2 und eine Prognoseeinheit 3 aufweist, wobei die Datenbank 2 historische Felddaten 4, aktuelle Felddaten 5 und erwartete Felddaten 6 des landwirtschaftlichen Feldes F umfasst, wobei die Felddaten 4, 5, 6 Feldzustandsdaten und Feldumgebungsdaten umfassen, wobei mittels der Prognoseeinheit 3 auf Grundlage einer Planungsvorgabe 8 und abhängig von den Felddaten 4, 5, 6 anhand eines vorgegebenen Prognosemodells 9 eine Ressourcenprognose ermittelt wird, welche den voraussichtlichen Bedarf von landwirtschaftlichen Ressourcen, zumindest Hilfsmittel und Betriebsmittel, zur Durchführung von landwirtschaftlichen Aktionen am Feld F entsprechend der Planungsvorgabe 8 abbildet. Wesentlich ist, dass die Datenbank 2 Ressourcendaten umfasst, welche die Verfügbarkeit von Ressourceneinheiten 10, 11 zur Bereitstellung der Ressourcen benennen, und dass mittels der Prognoseeinheit 3 anhand eines vorgegebenen Optimierungskriteriums in einer Ressourcenliste 12 der ermittelten Ressourcenprognose Ressourceneinheiten 10, 11 zugeordnet werden, welche in den Ressourcendaten als verfügbar benannt sind. Es darf auf die obigen Ausführungen zum vorschlagsgemäßen Assistenzsystem 1 verwiesen werden.

Gemäß einer Ausgestaltung des vorschlagsgemäßen Verfahrens werden die landwirtschaftlichen Aktionen am Feld F aus der Ressourcenprognose unter Verwendung der Ressourceneinheiten 10, 11 gemäß der Ressourcenliste 12 durchgeführt. Die von dem Assistenzsystem 1 erzeugte Ressourcenliste 12 wird somit letztlich umgesetzt.

### Bezugszeichenliste

- 1: Assistenzsystem
- 2: Datenbank
- 3: Prognoseeinheit
- 4: historische Felddaten
- 5: aktuelle Felddaten
- 6: erwartete Felddaten
- 7: externes System
- 8: Planungsvorgabe
- 9: Prognosemodell
- 10: Hilfsmittel
- 11: Betriebsmittel
- 12: Ressourcenliste
- 13: Sensor
- F: Feld

## Patentansprüche

1. Assistenzsystem zur Ermittlung einer Ressourcenprognose eines landwirtschaftlichen Feldes (F), wobei das Assistenzsystem (1) eine Datenbank (2) und eine Prognoseeinheit (3) aufweist, wobei die Datenbank (2) historische Felddaten (4), aktuelle Felddaten (5) und erwartete Felddaten (6) des landwirtschaftlichen Feldes (F) umfasst, wobei die Felddaten (4, 5, 6) Feldzustandsdaten und Feldumgebungsdaten umfassen,
wobei die Prognoseeinheit (3) auf Grundlage einer Planungsvorgabe (8) und abhängig von den Felddaten (4, 5, 6) anhand eines vorgegebenen Prognosemodells (9) eine Ressourcenprognose ermittelt, welche den voraussichtlichen Bedarf von landwirtschaftlichen Ressourcen, zumindest Hilfsmittel und Betriebsmittel, zur Durchführung von landwirtschaftlichen Aktionen am Feld (F) entsprechend der Planungsvorgabe (8) abbildet,
**dadurch gekennzeichnet,**
**dass** die Datenbank (2) Ressourcendaten umfasst, welche die Verfügbarkeit von Ressourceneinheiten (10, 11) zur Bereitstellung der Ressourcen benennen, und dass die Prognoseeinheit (3) anhand eines vorgegebenen Optimierungskriteriums in einer Ressourcenliste (12) der ermittelten Ressourcenprognose Ressourceneinheiten (10, 11) zuordnet, welche in den Ressourcendaten als verfügbar benannt sind,
wobei die landwirtschaftlichen Aktionen am Feld (F) aus der Ressourcenprognose unter Verwendung der Ressourceneinheiten (10, 11) gemäß der Ressourcenliste (12) durchgeführt werden.

2. Assistenzsystem nach Anspruch 1, **dadurch gekennzeichnet, dass** die Planungsvorgabe (8) von dem Benutzer vorgegeben wird und/oder von dem Assistenzsystem ermittelt wird.

3. Assistenzsystem nach Anspruch 1 oder 2, **dadurch gekennzeichnet, dass** die Ressourcenprognose eine Ertragsprognose eines Feldbestands des Feldes (F) basierend auf den Felddaten umfasst und das Optimierungskriterium die Ertragsprognose betrifft.

4. Assistenzsystem nach einem der vorhergehenden Ansprüche, **dadurch gekennzeichnet, dass** die Ressourcendaten weiter den jeweiligen Ressourceneinheiten (10, 11) zugeordnete Ressourcenwirkungsdaten, vorzugsweise Ressourcenkostendaten und/oder Umweltverträglichkeitsdaten, umfassen.

5. Assistenzsystem nach einem der vorhergehenden Ansprüche, **dadurch gekennzeichnet, dass** die Prognoseeinheit (3) anhand der Ressourcenprognose eine Gewinnprognose des Feldes (F) basierend auf den Ressourcenkostendaten ermittelt, und dass das Optimierungskriterium die Gewinnprognose betrifft.

6. Assistenzsystem nach einem der vorhergehenden Ansprüche, **dadurch gekennzeichnet, dass** die Prognoseeinheit (3) anhand der Ressourcenprognose eine Umweltverträglichkeitsprognose des Feldes (F) basierend auf den Umweltverträglichkeitsdaten ermittelt und das Optimierungskriterium die Umweltverträglichkeitsprognose betrifft.

7. Assistenzsystem nach einem der vorhergehenden Ansprüche, **dadurch gekennzeichnet, dass** das Assistenzsystem (1) in einer Reservierroutine die in der Ressourcenliste (12) zugeordneten Ressourceneinheiten (10, 11) in den Ressourcendaten als unverfügbar benennt.

8. Assistenzsystem nach einem der vorhergehenden Ansprüche, **dadurch gekennzeichnet, dass** die Prognoseeinheit (3) anhand des Optimierungskriteriums eine Trefferliste mit mehreren Ressourcenlisten (12) von als verfügbar benannten Ressourceneinheiten (10, 11) erzeugt, vorzugsweise, dass die Trefferliste anhand einer in der Ressourcenprognose abgebildeten Wahrscheinlichkeit zur Erfüllung des Optimierungskriteriums geordnet ist.

9. Assistenzsystem nach einem der vorhergehenden Ansprüche, **dadurch gekennzeichnet, dass** die Feldzustandsdaten Wirkstoffdaten, Fruchtdaten und/oder Bodendaten, insbesondere Nährstoffdaten, und/oder Schädlingsdaten umfassen, und/oder, dass die Feldzustandsdaten von mindestens einem Sensor (13), insbesondere einem Sensor (13) einer landwirtschaftlichen Arbeitsmaschine, ermittelt werden.

10. Assistenzsystem nach einem der vorhergehenden Ansprüche, **dadurch gekennzeichnet, dass** die Feldumgebungsdaten Wetterdaten und/oder Schädlingsdaten umfassen.

11. Assistenzsystem nach einem der vorhergehenden Ansprüche, **dadurch gekennzeichnet, dass** die Ressourceneinheiten (10, 11) landwirtschaftliche Arbeitsmaschinen, Werkzeuge, Saatgute, Pflanzenschutzmittel und/oder Düngemittel umfassen.

12. Verfahren zur Ermittlung einer Ressourcenprognose eines landwirtschaftlichen Feldes (F) mittels eines landwirtschaftlichen Assistenzsystems (1), wobei das Assistenzsystem (1) eine Datenbank (2) und eine Prognoseeinheit (3) aufweist, wobei die Datenbank (2) historische Felddaten (4), aktuelle Felddaten (5) und erwartete Felddaten (6) des landwirtschaftlichen Feldes (F) umfasst, wobei die Felddaten (4, 5, 6) Feldzustandsdaten und Feldumgebungsdaten umfassen, wobei mittels der Prognoseeinheit (3) auf Grundlage einer Planungsvorgabe (8) und abhängig von den Felddaten (4, 5, 6) anhand eines vorgegebenen Prognosemodells (9) eine Ressourcenprognose ermittelt wird, welche den voraussichtlichen Bedarf von landwirtschaftlichen Ressourcen, zumindest Hilfsmittel und Betriebsmittel, zur Durchführung von landwirtschaftlichen Aktionen am Feld (F) entsprechend der Planungsvorgabe (8) abbildet,
**dadurch gekennzeichnet,**
**dass** die Datenbank (2) Ressourcendaten umfasst, welche die Verfügbarkeit von Ressourceneinheiten (10, 11) zur Bereitstellung der Ressourcen benennen, und dass mittels der Prognoseeinheit (3) anhand eines vorgegebenen Optimierungskriteriums in einer Ressourcenliste (12) der ermittelten Ressourcenprognose Ressourceneinheiten (10, 11) zugeordnet werden, welche in den Ressourcendaten als verfügbar benannt sind,
wobei die landwirtschaftlichen Aktionen am Feld (F) aus der Ressourcenprognose unter Verwendung der Ressourceneinheiten (10, 11) gemäß der Ressourcenliste (12) durchgeführt werden.

## Claims

1. Assistance system for determining a resource forecast for an agricultural field (F), wherein the assistance system (1) has a database (2) and a forecast unit (3), wherein the database (2) comprises historical field data (4), current field data (5) and expected field data (6) relating to the agricultural field (F), wherein the field data (4, 5, 6) comprise field condition data and field environment data,
wherein the forecast unit (3), on the basis of a planning specification (8) and depending on the field data (4, 5, 6), uses a predefined forecast model (9) to determine a resource forecast representing the foreseeable need for agricultural resources, at least aids and equipment, for carrying out agricultural actions on the field (F) according to the planning specification (8),
**characterized**
**in that** the database (2) comprises resource data that specify the availability of resource units (10, 11) for providing the resources, and in that the forecast unit (3) uses a predefined optimization criterion to assign resource units (10, 11) that are specified as available in the resource data to the determined resource forecast in a resource list (12), wherein the agricultural actions on the field (F) are carried out from the resource forecast using the resource units (10, 11) according to the resource list (12).

2. Assistance system according to Claim 1, **characterized in that** the planning specification (8) is specified by the user and/or determined by the assistance system.

3. Assistance system according to Claim 1 or 2, **characterized in that** the resource forecast comprises a yield forecast of a field-grown crop of the field (F) based on the field data and the optimization criterion relates to the yield forecast.

4. Assistance system according to one of the preceding claims, **characterized in that** the resource data further comprise resource effect data, preferably resource cost data and/or environmental compatibility data, assigned to the respective resource units (10, 11).

5. Assistance system according to one of the preceding claims, **characterized in that** the forecast unit (3) uses the resource forecast to determine a profit forecast of the field (F) based on the resource cost data, and **in that** the optimization criterion relates to the profit forecast.

6. Assistance system according to one of the preceding claims, **characterized in that** the forecast unit (3) uses the resource forecast to determine an environmental compatibility forecast for the field (F) based on the environmental compatibility data and the optimization criterion relates to the environmental compatibility forecast.

7. Assistance system according to one of the preceding claims, **characterized in that** the assistance system (1) in a reservation routine specifies the resource units (10, 11) assigned in the resource list (12) as unavailable in the resource data.

8. Assistance system according to one of the preceding claims, **characterized in that** the forecast unit (3) uses the optimization criterion to generate a hit list with a plurality of resource lists (12) of resource units (10, 11) specified as available, preferably **in that** the hit list is ordered based on a probability represented in the resource forecast for satisfying the optimization criterion.

9. Assistance system according to one of the preceding claims, **characterized in that** the field condition data comprise active ingredient data, fruit data and/or soil data, in particular nutrient data, and/or pest data, and/or **in that** the field condition data are determined by at least one sensor (13), in particular a sensor (13) of an agricultural work machine.

10. Assistance system according to one of the preceding claims, **characterized in that** the field environment data comprise weather data and/or pest data.

11. Assistance system according to one of the preceding claims, **characterized in that** the resource units (10, 11) comprise agricultural work machines, tools, seeds, crop protection agents and/or fertilizers.

12. Method for determining a resource forecast for an agricultural field (F) by means of an agricultural assistance system (1), wherein the assistance system (1) has a database (2) and a forecast unit (3), wherein the database (2) comprises historical field data (4), current field data (5) and expected field data (6) relating to the agricultural field (F), wherein the field data (4, 5, 6) comprise field condition data and field environment data, wherein a resource forecast representing the foreseeable need for agricultural resources, at least aids and equipment, for carrying out agricultural actions on the field (F) according to a planning specification (8) is determined by means of the forecast unit (3) on the basis of the planning specification (8) and depending on the field data (4, 5, 6) using a predefined forecast model (9),
**characterized**
**in that** the database (2) comprises resource data that specify the availability of resource units (10, 11) for providing the resources, and in that resource units (10, 11) that are specified as available in the resource data are assigned to the determined resource forecast in a resource list (12) by means of the forecast unit (3) using a predefined optimization criterion,
wherein the agricultural actions on the field (F) are carried out from the resource forecast using the resource units (10, 11) according to the resource list (12).

## Revendications

1. Système d'aide à la détermination d'une prévision de ressources pour un champ (F) agricole, le système d'aide (1) comprenant une base de données (2) et une unité de prévision (3), la base de données (2) comportant des données de champ historiques (4), des données de champ actuelles (5) et des données de champ attendues (6) du champ (F) agricole, les données de champ (4, 5, 6) englobant des données d'état du champ et des données d'environnement du champ,
l'unité de prévision (3) déterminant, sur la base d'une consigne de planification (8) et en fonction des données de champ (4, 5, 6), à l'aide d'un modèle de prévision (9) prédéfini, une prévision de ressources qui reproduit les besoins prévisionnels en ressources agricoles, au moins en matières auxiliaires et en matières consommables, en vue de la réalisation d'actions agricoles dans le champ (F), conformément à la consigne de planification (8)
**caractérisé en ce que**
la base de données (2) comprend des données de ressources qui désignent la disponibilité d'unités de ressources (10, 11) aux fins de mise à disposition des ressources, et **en ce que** l'unité de prévision (3) attribue, à l'aide d'un critère d'optimisation prédéfini, dans une liste de ressources (12), des unités de ressources (10, 11) à la prévision de ressources déterminée, lesquelles sont désignées dans les données de ressources comme étant disponibles,
les actions agricoles dans le champ (F) étant exécutées à partir de la prévision de ressources, en utilisant les unités de ressources (10, 11) conformément à la liste de ressources (12).

2. Système d'aide selon la revendication 1, **caractérisé en ce que** la consigne de planification (8) est prédéfinie par l'utilisateur et/ou est déterminée par le système d'aide.

3. Système d'aide selon la revendication 1 ou 2, **caractérisé en ce que** la prévision de ressources comprend une prévision de rendement d'une culture du champ (F), sur la base des données de champ, et que le critère d'optimisation concerne la prévision de rendement.

4. Système d'aide selon une des revendications précédentes, **caractérisé en ce que** les données de ressources comprennent en outre des données relatives à l'efficacité des ressources, de préférence des données de coûts des ressources et/ou des données de compatibilité environnementale, qui sont associées aux unités de ressources (10, 11) respectives.

5. Système d'aide selon une des revendications précédentes, **caractérisé en ce que** l'unité de prévision (3) détermine, à l'aide de la prévision de ressources, une prévision de gain du champ (F) sur la base des données de coûts des ressources, et **en ce que** le critère d'optimisation concerne la prévision de gain.

6. Système d'aide selon une des revendications précédentes, **caractérisé en ce que** l'unité de prévision (3) détermine, à l'aide de la prévision de ressources, une prévision de compatibilité environnementale du champ (F) sur la base des données relatives à la compatibilité environnementale, et le critère d'optimisation concerne la prévision de compatibilité environnementale.

7. Système d'aide selon une des revendications précédentes, **caractérisé en ce que** dans une routine de réservation, le système d'aide (1) désigne les unités de ressources (10, 11) attribuées dans la liste de ressources (12) comme étant non disponibles dans les données de ressources.

8. Système d'aide selon une des revendications précédentes, **caractérisé en ce que** l'unité de prévision (3) génère, à l'aide du critère d'optimisation, une liste de résultats avec plusieurs listes de ressources (12) d'unités de ressources (10, 11) désignées comme étant disponibles, de préférence **en ce que** la liste de résultats est classée à l'aide d'une probabilité de réponse au critère d'optimisation, qui est représentée dans la prévision de ressources.

9. Système d'aide selon une des revendications précédentes, **caractérisé en ce que** les données d'état du champ comprennent des données de substances actives, des données de cultures et/ou des données de sol, en particulier des données de substances nutritives et/ou des données d'organismes nuisibles, et/ou **en ce que** les données d'état du champ sont déterminées par au moins un capteur (13), notamment un capteur (13) d'une machine agricole.

10. Système d'aide selon une des revendications précédentes, **caractérisé en ce que** les données d'environnement du champ comprennent des données météorologiques et/ou des données d'organismes nuisibles.

11. Système d'aide selon une des revendications précédentes, **caractérisé en ce que** les unités de ressources (10, 11) comprennent des machines agricoles, des outils, des semences, des produits phytosanitaires et/ou des engrais.

12. Procédé de détermination d'une prévision de ressources d'un champ (F) agricole au moyen d'un système d'aide (1) agricole, ledit système d'aide (1) comprenant une base de données (2) et une unité de prévision (3), la base de données (2) comportant des données de champ historiques (4), des données de champ actuelles (5) et des données de champ attendues (6) du champ (F) agricole, les données de champ (4, 5, 6) englobant des données d'état du champ et des données d'environnement du champ, l'unité de prévision (3) déterminant, sur la base d'une consigne de planification (8) et en fonction des données de champ (4, 5, 6), à l'aide d'un modèle de prévision (9) prédéfini, une prévision de ressources qui reproduit les besoins prévisionnels en ressources agricoles, au moins en matières auxiliaires et en matières consommables, en vue de la réalisation d'actions agricoles dans le champ (F), conformément à la consigne de planification (8)
**caractérisé en ce que**
la base de données (2) comprend des données de ressources qui désignent la disponibilité d'unités de ressources (10, 11) aux fins de mise à disposition des ressources, et **en ce que** l'unité de prévision (3) attribue, dans une liste de ressources (12), à l'aide d'un critère d'optimisation prédéfini, des unités de ressources (10, 11) à la prévision de ressources déterminée, lesquelles sont désignées dans les données de ressources comme étant disponibles,
les actions agricoles dans le champ (F) étant exécutées à partir de la prévision de ressources, en utilisant les unités de ressources (10, 11) conformément à la liste de ressources (12).
